# EUROPÄISCHE PATENTSCHRIFT

(11) **EP 3 797 600 B1**
(45) Veröffentlichungstag und Bekanntmachung des Hinweises auf die Patenterteilung: **28.02.2024**
(21) Anmeldenummer: 20199132.0
(22) Anmeldetag: 30.09.2020
(51) Int. Cl.: A23G 1/20, A23G 7/02

(54) **VORRICHTUNG ZUM TEMPERIEREN VON VERZEHRGUT**
METHOD FOR TEMPERING CONSUMABLES
DISPOSITIF DE MISE EN TEMPÉRATURE D'UN PRODUIT DE CONSOMMATION

(30) Priorität: 30.09.2019 DE 102019126354; 18.12.2019 DE 102019134989
(43) Veröffentlichungstag der Anmeldung: 31.03.2021
(73) Patentinhaber: KNOBEL, Guido, 8268 Salenstein (CH)
(72) Erfinder: KNOBEL, Guido, 8268 Salenstein (CH)
(74) Vertreter: Patentanwälte und Rechtsanwalt Weiß, Arat & Partner mbB

(56) Entgegenhaltungen:
- EP-A1- 1 757 192
- WO-A1-2019/162341
- DE-U1- 29 904 127
- US-B1- 6 318 111

## Beschreibung

Die Erfindung betrifft eine Vorrichtung zum Temperieren von Verzehrgut, insbesondere von Schokoladenartikel nach dem Oberbegriff von Anspruch 1.

### Stand der Technik

Aus der EP 1 757 192 A1 ist eine Vorrichtung zum Temperieren von Gegenständen, insbesondere zum Kühlen von Verzehrgütern in der Confiserie, mit einem Hohlkörper mit Öffnungen in seinem Mantel bekannt, welcher von einer Führung für die Gegenstände umfangen ist. Dabei wird Luft aus dem Hohlkörper angesaugt, diese durch ein Temperierelement durchgedrückt, die Luft anschließend entfeuchtet und danach von außen der Führung für die Gegenstände zugeführt.

Die DE 299 04 127 U1 zeigt eine Vorrichtung zum Kühlen und/oder Anwärmen von Gegenständen, wobei einem Zylinder, in dessen Innenraum Luft eingeführt wird, die aus Luftöffnungen ausströmt, ein Wendelförderer zugeordnet ist, auf dem die Gegenstände an den Luftöffnungen vorbeigeführt werden.

Die US 6,318,111 B1 wiederum beschreibt ein Transportband für den Transport von kalten Lebensmitteln, welche von seitlich austretender Luft angeströmt werden.

Aus der WO 2019 162 341 A1 ist eine Vorrichtung nach dem Oberbegriff von Anspruch 1 bekannt, bei der in einer Bearbeitungsstation einzelne, getrennte Ablagen für die Formen vorgesehen sind. Das Handling dieser Formen erfolgt mittels eines Roboters. Die Ablagen gehen eine nur punkt- oder linienförmige Berührung mit den Formen ein.

### Aufgabe

Aufgabe der vorliegenden Erfindung ist es, die oben genannte Vorrichtung und zwar insbesondere im Hinblick auf die erforderliche Hygiene zu verbessern und gleichzeitig auch die Behandlung mit dem Temperiermedium zu optimieren.

### Lösung der Aufgabe

Zur Lösung der Aufgabe führen die Merkmale des kennzeichnenden Teils von Anspruch 1.

Durch die Anordnung der Schlitze oberhalb und unterhalb der Form erfolgt eine gezielte Beaufschlagung der Form mit dem Temperiermedium. Die Form und Anordnung der Schlitze spielt für die vorliegende Erfindung eine sehr grosse Rolle, wie dies später noch beschrieben wird.

Die Ablagen sollen als Profile ausgebildet sein. Sie können aus einem beliebigen Material bestehen, bevorzugt wird natürlich ein pflegeleichtes Material, wie zum Beispiel Edelstahl. Wird ein Metall zur Herstellung der Ablagen verwendet, so bietet es sich an, einen entsprechenden Metallstreifen je nach Wunsch abzukanten.

Gemäss der vorliegenden Erfindung soll das Profil einen Kanalteil aufweisen, von dem seitlich jeweils ein Randstreifen abragt, auf dem die Form aufliegt, und welches zur Wand hin offen ist. D.h., die Form wird nur von den Randstreifen getragen, so dass sie in ihren wesentlichen Teilen dem Temperiermedium zugänglich bleibt. Unter der Form wird ein seitlich geschlossener, nur nach vorne offener Raum gebildet, in den die unteren und oberen Schlitze, die in die Wand eingeformt sind, ausmünden. Das bedeutet wiederum, dass das Temperiermedium in gewissem Umfang in diesem Raum unterhalb der Form gefangen ist und somit den Boden und das Oberteil der Form intensiv anspült. Wird ein kühlendes Temperiermedium verwendet, so sackt dieses nicht gleich nach unten weg, sondern wird in dem Raum nach oben gegen den Boden der Form gedrückt. Dort kann es seine kühlende Wirkung in ausreichendem Masse entfalten. Unter der Form kann der Raum aber auch offen sein.

Wesentlich bei der vorliegenden Erfindung ist, dass ein unterer Rand des unteren Schlitzes in der Ebene eines Kanalbodens liegt. Das bedeutet, dass beispielsweise ein Reinigungsmittel, mit dem das gesamte Profil und insbesondere der Profilboden gereinigt wird, nach hinten durch die Wand abfliessen kann und nicht in einem Übergangsbereich zwischen Wand und Profil, welches in der Regel rechtwinklig von der Wand absteht, stehen bleibt. Somit ist eine vollständige und intensive Reinigung des Profils möglich.

An zumindest einen seitlichen Randstreifen des Kanalteils schliesst bevorzugt ein Z-förmiges Schienenprofil an. Dieses Schienenprofil begrenzt den Bewegungsbereich der Form, so dass die Form in einer gewünschten, vorgegebenen Anordnung auf der Ablage gehalten wird.

Die oberen Schlitze sollen sich bevorzugt im Wesentlichen über die Breite der Form erstrecken. Wird ein kühlendes Temperiermedium verwendet, so fällt dieses aus den oberen Schlitzen infolge der Breite dieser Schlitze regelmässig verteilt auf die Form, so dass die Kühlung der Form vergleichmässigt ist.

In einem bevorzugten Ausführungsbeispiel der Erfindung sollen die unteren Schlitze eine geringere Breite als die oberen Schlitze aufweisen. Dies bedeutet, dass aus den unteren Schlitzen weniger Temperiermedium austritt, als aus den oberen Schlitzen. Dies trägt dem Umstand Rechnung, dass das Temperiermedium aus den unteren Schlitzen unterhalb der Form in dem durch das Profil und die Form gebildeten Raum gefangen ist, während das Temperiermedium aus den oberen Schlitzen frei über die Form hinwegfliesst. Aus diesem Grunde ist für eine gleichmässige Temperierung der Form oberhalb der Form mehr Temperiermedium notwendig als unterhalb der Form. Die oberen und unteren Schlitze können aber auch gleich gross sein.

Im Rahmen der Erfindung ist, wie oben erwähnt, vorgesehen, dass die Ablagen stumpf an die Wand anschlagen und von dieser in etwa in einem Winkel von 90° abragen, wobei ein Spalt zwischen Ablage und Wand geschlossen ist. Wird als Ablage ein metallischer Profilstreifen verwendet, so bietet es sich an, diesen direkt an die Wand anzuschweissen, wobei die Schweissnaht so ausgebildet sein kann, dass sich Schmutz bzw. Reinigungsmittel nicht in dem Bereich zwischen Ablage und Wand ansammelt. Beispielsweise kann die Schweissnaht abgeschrägt von der Wand zum Profil hin ausgebildet werden.

In einem Ausführungsbeispiel kann die Wand Teil eines geschlossenen Wandkastens sein, in den das Temperiermedium einführbar ist. Das bedeutet, dass das Temperiermedium in dem Wandkasten, der geschlossen ist, in geringem Masse unter Druck steht und so auch aus den Schlitzen unter einem geringen Druck austritt. Da die Breite der oberen Schlitze grösser ist als die Breite der unteren Schlitze, verlangsamt sich der Austritt des Temperiermediums aus den oberen Schlitzen gegenüber den unteren Schlitzen. D.h., das Temperiermedium fällt aus den oberen Schlitzen ruhiger auf die Form, während das Anspülen des Formbodens mit dem Temperiermedium aus den unteren Schlitzen intensiver erfolgt. Hierfür könnte auch vorgesehen werden, dass die unteren Schlitze eine eher nach oben zum Formboden hin gerichtete Ausrichtung erhalten, wozu auch zusätzliche Leitelemente angeordnet sein könnten. Die oberen und unteren Schlitze können auch gleich gross sein.

Durch den Überdruck im Wandkasten und die richtige Dimensionierung der Austrittsschlitze und Beibehaltung eines kleinen Überdrucks ist ein nahezu gleichmässiges Ausströmen der Luft bei den Schlitzen ohne Luftleitbleche gewährleistet. Der Wandkasten ist komplett hohl ohne Luftleitbleche. Aus diesem Grund kann er einfacher gereinigt werden, was die Hygiene wesentlich verbessert.

Für das Einbringen des Temperiermediums in den Wandkasten sind viele Möglichkeiten denkbar und sollen von der vorliegenden Erfindung umfasst sein. In einem bevorzugten Ausführungsbeispiel ist vorgesehen, dass dem Wandkasten zumindest ein Ansaugventilator zugeordnet ist. Dieser Ansaugventilator saugt ein Temperiermedium an und drückt es in den Wandkasten.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Frontansicht einer erfindungsgemässen Vorrichtung zum Temperieren von Verzehrgut;
**Figur 2** einen Ausschnitt aus einer direkte Frontansicht der Vorrichtung gemäss Figur 1;

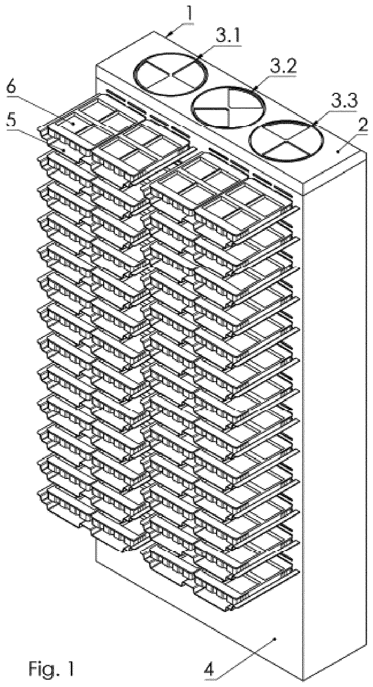

Eine erfindungsgemässe Vorrichtung zum Temperieren von Verzehrgut weist gemäss Figur 1 einen Wandkasten 1 auf, der als rechteckiger Kubus im vorliegenden Ausführungsbeispiel dargestellt ist. Im Inneren ist der Wandkasten 1 hohl und insgesamt im Wesentlichen geschlossen.

In eine obere Abdeckung 2 sind drei Ventilatoren 3 .1, 3.2 und 3.3 integriert. Dabei kann es sich beispielsweise um Ansaugventilatoren handeln, welche ein Temperiermedium ansaugen und in den Wandkasten 1 eindrücken. Natürlich kann das Temperiermedium auch auf andere Art und Weise in den Wandkasten 1 eingefüllt werden. Z.B. können aber auch mehr oder weniger Ventilatoren integriert sein.

Der Wandkasten 1 weist eine Wand 4 auf, an der eine Vielzahl von Ablagen 5 angeordnet ist. In Gebrauchslage liegen auf diesen Ablagen 5 zu behandelnde Formen 6 auf.

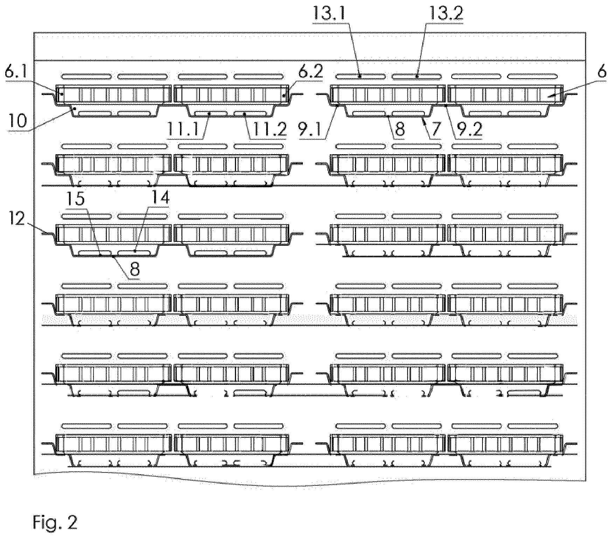

In Figur 2 sind die Ablagen 5 besser erkennbar. Im gezeigten Ausführungsbeispiel dient die Ablage 5 dem Tragen von zwei benachbarten Formen 6.1 und 6.2. Natürlich könnte die Ablage auch nur eine Form oder mehrere Formen tragen.

Jede Ablage 5 besteht aus einem Profil, das in gewünschter Weise abgekantet ist. Im Ausführungsbeispiel wird ein Kanalteil 7 mit einem Kanalboden 8 und zumindest einem Randstreifen 9 gebildet. Auf dem Randstreifen 9 liegt die Form 6 auf, so das dann durch die Randstreifen 9.1 und 9.2, den Kanalboden 8 und die Form 6 ein nach vorne offener Raum 10 ausgebildet ist. In diesen Raum 10 münden zwei untere Schlitze 11.1 und 11.2 aus, die eine Breite b1 besitzen.

An den Randstreifen 9.1 schliesst seitlich ein Z-förmiges Schienenprofil 12 an, welches der seitlichen Begrenzung der Form 6 dient.

Oberhalb der Form 6 sind zwei obere Schlitze 13.1 und 13.2 vorgesehen, welche wiederum eine Breite b2 aufweisen, die grösser ist als die Breite b1.

Die Funktionsweise der vorliegenden Erfindung ist folgende:
Zum Temperieren werden die Formen 6 manuell oder mit einer Handling-Einrichtung auf den Ablagen 5 abgelegt. Sodann wird mittels der Ventilatoren 3.1 - 3.3 Luft als Temperiermedium angesaugt und in den Wandkasten 1 eingedrückt. Dieses Temperiermedium tritt sowohl aus den unteren Schlitzen 11.1 und 11.2 als auch aus den oberen Schlitzen 13.1 und 13.2 aus. Das aus den oberen Schlitzen 13.1 und 13.2 austretende Temperiermedium fällt auf die Oberfläche der Form 6 und verteilt sich dort gleichmässig zum Temperieren. Dies wird auch durch die grössere Breite b1 der oberen Schlitze 13.1 und 13.2 unterstützt, die sich fast über die gesamte Breite der Form erstrecken.

Das Temperiermedium aus den unteren Schlitzen 11.1 und 11.2 gelangt in den nur nach vorne offenen Raum 10 und ist somit in diesem Raum 10 in gewissem Umfang gefangen, so dass es nach oben gegen den Boden der Form 6 gedrückt wird. Dies unterstützt dort das Temperieren. Durch die Wahl einer geringeren Breite b1 der unteren Schlitze 11.1 und 11.2 gegenüber der Breite b2 der oberen Schlitze 13.1 und 13.2 tritt das Temperiermedium etwas beschleunigt in den Raum 10 aus, so dass es dort von unten den Boden der Form 6 gleichmässig anströmt. Dies trägt ebenfalls zur Vergleichmässigung der Temperierung der Form bei. In der Regel handelt es sich dabei um eine Kühlung.

Erkennbar ist auch, dass ein unterer Rand 14 der unteren Schlitze 11.1 bzw. 11.2 mit einer Oberfläche 15 des Kanalbodens 8 in einer Ebene liegt. Das bedeutet, dass Schmutz oder auch Reinigungsmittel nicht in dem Bereich des Kanalteils 7, wo dieses an die Wand 4 anschlägt, liegen bleiben kann, sondern nach hinten durch die unteren Schlitze 11.1 bzw. 11.2 abfliesst. Dadurch wird die Reinigungsmöglichkeit der Ablagen 5 wesentlich verbessert.

### Bezugszeichenliste

| | | | | | |
|---|---|---|---|---|---|
| 1 | Wandkasten | 34 | | 67 | |
| 2 | Abdeckung | 35 | | 68 | |
| 3 | Ventilator | 36 | | 69 | |
| 4 | Wand | 37 | | 70 | |
| 5 | Ablage | 38 | | 71 | |
| 6 | Form | 39 | | 72 | |
| 7 | Kanalteil | 40 | | 73 | |
| 8 | Kanalboden | 41 | | 74 | |
| 9 | Randstreifen | 42 | | 75 | |
| 10 | Raum | 43 | | 76 | |
| 11 | untere Schlitz | 44 | | 77 | |
| 12 | Schienenprofil | 45 | | 78 | |
| 13 | oberer Schlitz | 46 | | 79 | |
| 14 | unterer Rand | 47 | | | |
| 15 | Oberfläche | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Temperieren von Verzehrgut, insbesondere von Schokoladenartikel, in zumindest einer Form (6) nach dem Einfüllen des Verzehrgutes in diese Form (6), wobei an einer Wand (4) Ablagen (5) für die Formen (6) vorgesehen sind und in der Wand (4) oberhalb und unterhalb der Form Schlitze (11.1,11.2; 13.1,13.2) zum Austreten eines Temperiermediums vorgesehen sind, wobei die Ablagen (5) als Profile ausgebildet sind,
**dadurch gekennzeichnet,**
**dass** die Ablage (5) einen Kanalteil (7) aufweist, von dem seitlich jeweils ein Randstreifen (9.1, 9.2) abragt, auf dem die Form (6) aufliegt und welcher zur Wand (4) hin offen ist, wobei untere Schlitze (11.1, 11.2) in der Höhe des Kanalteils (7) unterhalb der Form (6) vorgesehen sind und ein unterer Rand (14) des unteren Schlitzes (11.1, 11.2) in der Ebene eines Kanalbodens (8) liegt.

2. Vorrichtung nach Anspruch 1, **dadurch gekennzeichnet, dass** an zumindest einen seitlichen Randstreifen (9.1) des Kanalteils (7) ein Z-förmiges Schienenprofil (12) anschliesst.

3. Vorrichtung nach Anspruch 1 oder 2, **dadurch gekennzeichnet, dass** sich die oberen Schlitze (13.1, 13.2) im Wesentlichen über die Breite der Form (6) erstrecken.

4. Vorrichtung nach wenigstens einem der vorhergehenden Ansprüche, **dadurch gekennzeichnet, dass** die Ablagen (5) stumpf an die Wand (4) anschlagen und von dieser in etwa in einem Winkel von 90° abragen, wobei ein Spalt zwischen Ablage (5) und Wand (4) geschlossen ist.

## Claims

1. Device for tempering edible products, in particular chocolate articles, in at least one mould (6) after the edible products is filled into this mould (6), wherein trays (5) for the moulds (6) are provided on a wall (4) and slots (11.1, 11.2; 13.1, 13.2) are provided in the wall (4) above and below the mould for the discharge of a tempering medium, wherein the trays (5) are formed as profiles,
**characterized in,**
**that** the tray (5) has a channel section (7) from which an edge strip (9.1, 9.2) projects laterally in each case, on which the mould (6) rests and which is open towards the wall (4), lower slots (11.1, 11.2) being provided at the height of the channel section (7) below the mould (6) and a lower edge (14) of the lower slot (11.1, 11.2) lying in the plane of a channel bottom (8).

2. Device according to 1, **characterized in that** a Z-shaped rail profile (12) is connected to at least one lateral edge strip (9.1) of the channel section (7).

3. Device according to claim 1 or 2, **characterized in that** the upper slots (13.1, 13.2) extend essentially over the width of the mould (6).

4. Device according to at least one of the preceding claims, **characterized in that** the trays (5) butt against the wall (4) and protrude therefrom at an angle of approximately 90°, whereby a gap between the tray (5) and the wall (4) is closed.

## Revendications

1. Dispositif permettant de réguler la température de produits de consommation, en particulier d'articles en chocolat, dans au moins un moule (6) après le remplissage dudit moule (6) du produit de consommation, dans lequel des étagères (5) pour les moules (6) sont prévues sur une paroi (4) et des fentes (11.1, 11.2 ; 13.1, 13.2) permettant la sortie d'un agent de régulation de température sont prévues dans la paroi (4) au-dessus et en dessous du moule, dans lequel les étagères (5) sont réalisées sous forme de profilés,
**caractérisé en ce**
**que** l'étagère (5) présente une partie de canal (7) depuis laquelle respectivement une bande de bord (9.1, 9.2) fait saillie latéralement, sur laquelle bande de bord repose le moule (6) et laquelle bande de bord est ouverte vers la paroi (4), dans lequel les fentes inférieures (11.1, 11.2) sont prévues à la hauteur de la partie de canal (7) en dessous du moule (6) et un bord inférieur (14) de la fente inférieure (11.1, 11.2) est situé dans le plan d'un fond de canal (8).

2. Dispositif selon la revendication 1, **caractérisé en ce qu'**un profilé de rail (12) en forme de Z se raccorde à au moins une bande de bord (9.1) latérale de la partie de canal (7).

3. Dispositif selon la revendication 1 ou 2, **caractérisé en ce que** les fentes supérieures (13.1, 13.2) s'étendent sensiblement sur la largeur du moule (6).

4. Dispositif selon au moins l'une des revendications précédentes, **caractérisé en ce que** les étagères (5) viennent en butée sans enfoncement contre la paroi (4) et font saillie depuis celle-ci environ selon un angle de 90°, dans lequel un interstice est fermé entre l'étagère (5) et la paroi (4).
